(19) Europäisches Patentamt
European Patent Office
Office européen des brevets

(11) EP 0 824 277 A1

(12) **EUROPEAN PATENT APPLICATION**

(43) Date of publication:
18.02.1998 Bulletin 1998/08

(51) Int Cl.6: **H01M 4/58**, C01B 31/02

(21) Application number: 97306092.4

(22) Date of filing: 11.08.1997

(84) Designated Contracting States:
AT BE CH DE DK ES FI FR GB GR IE IT LI LU MC NL PT SE
Designated Extension States:
AL LT LV RO SI

(30) Priority: 12.08.1996 JP 212905/96

(71) Applicants:
• Japan Science and Technology Corporation
Kawaguchi-shi, Saitama-ken 332 (JP)
• MATSUSHITA ELECTRIC INDUSTRIAL CO., LTD.
Kadoma-shi, Osaka 571 (JP)

(72) Inventors:
• Uemachi, Yuji
1-310, Hokuriku-sentankagakugi jyuts
Tatsuguchi-cho Noumi-gun Ishikawa 923-12 (JP)
• Hong-An, Yu 202 Sungreen-Nishizoe
Shizuoka 410-03 (JP)
• Kaneko, Tomohiko,
502 Tokaidaigaku-shokuinjyutaku
Shizuoka 410-03 (JP)

(74) Representative: Calamita, Roberto
Frank B. Dehn & Co.,
European Patent Attorneys,
179 Queen Victoria Street
London EC4V 4EL (GB)

(54) **Carbonaceous electrode material for lithium battery**

(57) The invention provides a novel carbonaceous electrode material excellent in compatibility with lithium and an electrolyte of a lithium cell and in cell properties, which is a carbonaceous material prepared by burning a polymer or copolymer, in the presence of sulfuric acid, of an aromatic polyhydric alcohol.

EP 0 824 277 A1

## Description

The present invention relates to a battery electrode material. More particularly, the present invention relates to a novel battery electrode material which is useful as a negative electrode for a lithium battery, excellent in compatibility with lithium or an organic electrode, and has satisfactory cell properties such as capacity.

A lithium battery is known as a battery using metallic lithium and a nonaqueous electrolyte, and commercially available in the form of a compact battery such as a slender cylindrical type, a button type or a coin type. The lithium battery has a high cell voltage and a high energy density, and a wide range of service temperatures, thus attracting general attention as a future battery.

However, the lithium battery is defective in that lithium itself violently reacts with water, and that it is very difficult to find a cathode material excellent in compatibility with lithium and an organic electrolyte and capable of stably displaying excellent properties. Circumstances are not always satisfactory at present as to negative electrode.

For example, graphite fluoride $(CF)n$ and manganese dioxide $(MnO_2)$ are known as representative materials for a cathode, or materials counter to an anode, and various other carbonaceous materials have been proposed. These materials are not however sufficient in terms of ease of manufacture, compatibility with lithium and organic electrolytes, and improvement of cell properties such as capacity.

The present invention has therefore an object to provide a novel carbonaceous material for a battery electrode, which solves the foregoing problems, is easy to manufacture into a lithium battery and other battery electrodes, satisfactory in compatibility with positive electrodes such as lithium and an electrolyte and applicable as a battery electrode material having a larger capacity.

In the accompanying Drawings:

Fig. 1 is a partial sectional view illustrating the structure of the test cell;
Fig. 2 is a charge/discharge curve graph for burning at 600° C; and
Fig. 3 is a charge/discharge curve graph for burning at 700° C.

As a means for solving the foregoing problems, the present invention provides a battery electrode material which is a carbonaceous material obtained by burning a polymer resulting from polymerization or copolymerization, in the presence of sulfuric acid, of an aromatic polyhydric alcohol expressed by the following formula:

$$Ar(R)n$$

(where, Ar is an aromatic carbon ring which may have a substituent of one or more; R is the same or a different hydroxyalkyl group; and n is a number of 2 or more.)

The invention further provides embodiments of the foregoing electrode material manufactured by burning at a temperature within a range of from about 400 to 2,000° C, and of from 500 to 1,500° C, and application thereof as a negative electrode for a lithium battery.

The aromatic polyhydric alcohol which is the raw material of the carbonaceous electrode material of the invention is a monocyclic, polycyclic or composite cyclic aromatic ring having a plurality of kinds of hydroxyalkyl group, and may be, for example, any of benzenedimethanol (xylene glycol), benzenediethanol, benzenetrimethanol, toluenedimethanol, phenoldimethanol, naphthalenedimethanol, and hydroxymethyl-hydroxyethylbenzene.

The aromatic polyhydric alcohol may of course have an appropriate substituent which may be any of alkyl group, hydroxy group, alkoxy group and acyl group, as described above.

An aromatic polyhydric alcohol is polymerized or copolymerized by the action of sulfuric acid into a polymer. For the polymerization conditions in this case, it suffices to select conditions such as ratios of reaction components, the temperature thereof, and sulfuric acid concentration by considering the structure and properties of the carbonaceous material.

The resultant polymer is considered to be produced by the progress of polymerization or copolymerization as a polycondensation reaction under the effect of sulfuric acid, and the reaction product is in general in a powder or lump shape.

The polymer in the invention is burnt at a high temperature to convert into a carbonaceous material. This burning is accomplished usually in an inert gas atmosphere such as Ar (argon) at a temperature within a range of from about 400 to 2,000° C, or preferably, from 500 to 1,500° C. As a result of this burning, there is provided a novel electrode material useful as a negative electrode for a lithium battery. The burnt product is a typical non-graphitizable carbon in which the raw material polymer is present in the form of a three-dimensional bridge, and the basic carbon skeleton does not change even at a high burning temperature. Burning at a lower temperature leads to a longer average inter-layer distance $d_{002}$ and easier occlusion and extrusion, with an amount of occlusion of over the theoretical capacity (372 mAh/g).

The powder obtained after burning can be formed with a binder into an electrode. For example, polyvinylidene fluoride, CMC or a sulfur-based binder is used. Lithium salt dissolved into an organic solvent is usually used as the electrolyte forming the lithium cell. Any one or two or more in combination of organic solvents such as ethylene carbonate, propylene carbonate, $\gamma$-butyrolactone, dimethyl sulfoxide and sulfolane may be employed as the foregoing organic solvent.

A lithium salt such as $LiClO_4$, $LiPH_6$, $LiBF_4$, or $LiNH_4$ as a quaternary amine salt of Li may be used as the foregoing lithium salt.

The resultant carbonaceous material has a high compatibility with lithium or an electrolyte, shows a discharge capacity higher than the theoretical capacity of graphite, and is expected to serve as a large-capacity electrode material. Manufacture thereof is easy.

Now, the battery electrode material of the invention will be described below further in detail by means of the following non-limiting Examples.

**Examples**

<Preparation of polymer>

First, 30 g 1,4-benzenedimethanol (p-xylene glycol) (made by Tokyo Kasei Company) were mixed with 300 ml concentrated sufuric acid, and the mixture was stirred for polymerization for an hour at a temperature of 100° C. The produced polymer was rinsed with distilled water and dried, resulting in a powdery polymer.

<Burnt product>

The resultant powdery polymer was burnt for 30 minutes in an Ar (argon) atmosphere. A plurality of samples were prepared at various burning temperatures within a range of from 500 to 2,000° C.

An clement analysis showed an H/C ratio of 1.43 for the foregoing polymer, 0.60 for burning at 500° C, 0.25 for burning at 800° C, and 0.04 for burning at 1,500° C.

In an FT-IR spectrum of the foregoing polymer, a peak showing a sulfone group was observed at 1,200 $cm^{-1}$, and this was confirmed to correspond to the fact that S and O showed a value of 39.8 wt.% in the element analysis. This sulfone group resulted from sulfuric acid used in the polymerization reaction, suggesting that the polymerization reaction took place under the effect of the presence of sulfuric acid.

In the clement analysis, the ratio of S to O decreased to 6.2% in the product burnt at 500° C, and to 0 in the product burnt at 1,500° C. The content of carbon (C) was 89.2% for the product burnt at 500° C, and 99.6% for the product burnt at 1,500° C.

Table 1 shows values of $d_{002}$-spacing (nm) and BET specific surface area ($m^2$/g) for the resultant carbonaceous materials of different burning temperatures.

Table 1

| Burning temp. | $d_{002}$ spacing | BET spec.surf. |
|---|---|---|
| (° C) | (nm) | area ($m^2$/g) |
| 500 | 0.424 | 650 |
| 1000 | 0.406 | 730 |
| 1500 | 0.400 | 300 |
| 2000 | 0.373 | 80 |

Products of burning at temperatures of up to 1,500° C show a large value of $d_{002}$-spacing, whereas the value thereof decreases for 2,000° C, with a large decrease in the BET specific surface area as well.

<Test cell>

Each powder sample in an amount of 10 weight parts and 3 weight parts binder (polyvinylidene fluoride) were mixed and kneaded with a solvent (DMF: N,N'-dimethyl formamide) into a paste, which was then applied to copper foil. Afterdrying at 110 C for three hours, the foil was cut into 10 mm x 10 mm, and rolled to obtain an electrode for evaluation having a weight within a range of from 5 to 10 mg and a thickness within a range of from 50 to 100 $\mu$m.

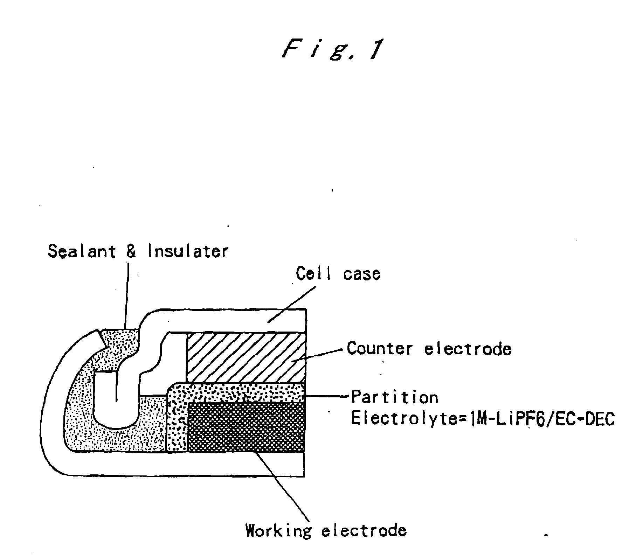

Each of the thus obtained electrode for evaluation was used as a working electrode: using a metallic lithium stamped at 10 mm diameter as a counter electrode, a coin type test cell was prepared as a test cell having a structure as shown in Fig. 1.

The counter electrode was used also as a reference electrode to carry out a charge/discharge test with two terminals. The electrolyte in this test was $1M-LiPF_6/EC-DEC$ (EC: ethylene carbonate; DEC: diethyl carbonate).

The above-mentioned test cell was subjected to a charge/discharge test at a constant current by determining a current value so as to give 15 hour-rate relative to the theoretical capacity of graphite, with a lower limit voltage of 0 V, and an upper limit voltage of 3 V. All the experiments were conducted at the room temperature.

The properties as shown in Table 2 were obtained in the test cells using samples burnt at 800° C and 1,200° C, respectively.

Table 2

|  | Burnt at 800° C | Burnt at 1,200° C |
|---|---|---|
| Initial discharge capacity (mAh/g) | 457 | 306 |
| 5th run charge capacity (mAh/g) | 352 | 222 |
| 5th run efficiency (%) | 98 | 97 |
| Cycle efficiency (%) | 92 | 90 |

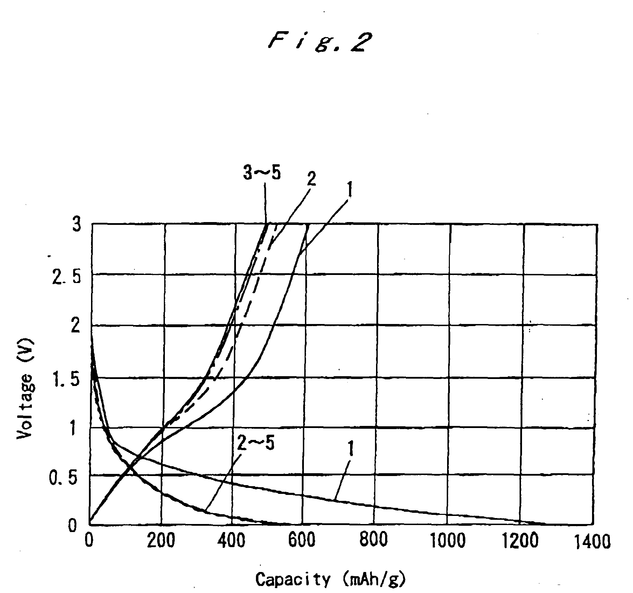

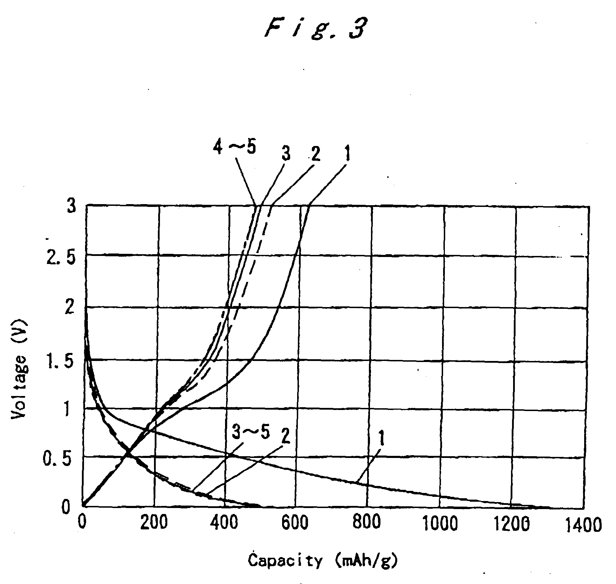

Figs. 2 and 3 graphs illustrating 1st~5th charge/discharge curves for samples burnt at 600° C and 700° C, respectively. The capacity exceeds 600 mAh/g, showing a capacity far larger than the theoretical capacity of graphite, thus proving the validity as a large-capacity lithium battery electrode.

It is needless to mention that the present invention is not limited in any manner by the foregoing example. Various further embodiments are possible.

According to the present invention, as described above in detail, there is provided a novel electrode material useful as a material of negative electrode for a lithium cell, which has a high compatibility with lithium and an electrolyte, excellent in cell properties, and is easily manufacturable by simple means of burning.

## Claims

1. A battery electrode material which is a carbonaceous material obtainable by burning a polymer resulting from polymerization or copolymerization, in the presence of sulfuric acid, of an aromatic polyhydric alcohol expressed by the following formula:

$$Ar(R)n$$

(where, Ar is an aromatic carbon ring which may have one or more substituents; R is the same or a different hydroxyalkyl group; and n is a number of 2 or more.)

2. An electrode material as claimed in claim 1, wherein said burning is carried out at a temperature within a range of from about 400 to 2,000°C.

3. An electrode material as claimed in claim 1 or claim 2 wherein said burning is carried out at a temperature within a range of from about 500 to 1,500°C.

4. A negative electrode material for a lithium battery comprising an electrode material as claimed in any one of claims 1 to 3.

5. A method of manufacturing a battery electrode material which comprises preparing a carbonaceous material by burning a polymer resulting from polymerization or copolymerization, in the presence of sulfuric acid, of an aromatic polyhydric alcohol expressed by the following formula:

$$Ar(R)n$$

(where, Ar is an aromatic carbon ring which may have a one or more substituents; R is the same or a different hydroxyalkyl group; and n is a number of 2 or more.)

6. The use of a carbonaceous material obtainable by burning a polymer resulting from polymerization or copolymerization, in the presence of sulfuric acid, of an aromatic polyhdric alcohol expressed by the following formula:

$$Ar(R)n$$

(where, Ar is an aromatic carbon ring which may have one or more substituents; R is the same or a different hydroxyalkyl group; and n is a number of 2 or more) in a battery electrode.

*Fig. 1*

Sealant & Insulater

Cell case

Counter electrode

Partition
Electrolyte=1M-LiPF6/EC-DEC

Working electrode

*Fig.2*

# F i g. 3

EP 0 824 277 A1

## EUROPEAN SEARCH REPORT

**Application Number**

EP 97 30 6092

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.6) |
| X | US 5 541 022 A (MIZUMOTO MAMORU  ET AL) <br> * example 2 * <br> --- | 1-6 | H01M4/58 <br> C01B31/02 |
| A | WO 95 00458 A (COMALCO ALU ;SHAW RAYMOND WALTER (AU); JURIC DRAGO DRAGUTIN (AU);) <br> * page 17, line 24 - line 27; claim 58 * <br> * page 1, line 1 - line 12 * <br> ----- | 1 | |
| | | | **TECHNICAL FIELDS SEARCHED** (Int.Cl.6) |
| | | | H01M <br> C01B |

The present search report has been drawn up for all claims

| Place of search | Date of completion of the search | Examiner |
|---|---|---|
| THE HAGUE | 21 November 1997 | Andrews, M |